# FASCICULE DE BREVET EUROPEEN

(11) **EP 3 545 184 B1**
(45) Date de publication et mention de la délivrance du brevet: **02.09.2020**
(21) Numéro de dépôt: 17812012.7
(22) Date de dépôt: 21.11.2017
(51) Int. Cl.: F02K 9/60, F04D 29/40, F04D 29/58, B29C 64/153

(54) **CARTER AMELIORÉ POUR ORGANE CRYOGENIQUE**
VERBESSERTES GEHÄUSE FÜR KRYOGENEN KÖRPER
IMPROVED HOUSING FOR CRYOGENIC BODY

(30) Priorité: 25.11.2016 FR 1661498
(43) Date de publication de la demande: 02.10.2019
(73) Titulaire: ArianeGroup SAS, 75015 Paris (FR)
(72) Inventeur: BRIAL, Alexandre, Michel, Stéphane, 27200 Vernon (FR)
(74) Mandataire: Cabinet Beau de Loménie
(86) Numéro de dépôt international: PCT/FR2017/053190
(87) Numéro de publication internationale: WO 2018/096254

(56) Documents cités:
- EP-A1- 3 034 413
- WO-A1-2014/155004
- FR-A1- 2 981 332
- FR-A1- 3 016 413

## Description

### DOMAINE DE L'INVENTION

Le présent exposé concerne le domaine de l'isolation thermique, et plus précisément des éléments structurels réalisant une isolation thermique par exemple pour des conduites ou réservoirs de fluides.

### ETAT DE LA TECHNIQUE ANTERIEURE

Les problématiques d'isolation sont récurrentes et cruciales pour les engins spatiaux employant des fluides cryogéniques, les pertes thermiques étant en effet à l'origine d'une surconsommation d'ergols cryogéniques et à la nécessité de maintenir les machines à des températures très faibles même en fonctionnement. Les carters des turbopompes et machines spatiales sont communément isolés par l'extérieur, par l'ajout d'une protection thermique venant recouvrir la machine.

Les turbopompes fonctionnant avec du fluide cryogénique tandis que l'extérieur de l'engin spatial est au contact de l'air ambiant, il est nécessaire de maximiser l'isolation thermique pour minimiser les phénomènes de pertes thermiques liées au rayonnement de l'extérieur vers la machine, par convection de l'air sur la machine et par conduction dans les parois du carter de la machine.

Par ailleurs, la très faible température de la paroi externe de l'engin spatial peut provoquer l'apparition de glace, ce qui peut s'avérer dommageable pour l'engin spatial.

Les solutions proposées actuellement consistent notamment à positionner manuellement un ou plusieurs systèmes annexes tels que des housses jouant un rôle d'isolant thermiques. On comprend bien que de telles solutions sont contraignantes en termes de mise en œuvre, et présentent une efficacité qui dépend grandement de leur bonne fabrication et installation. Le document FR3016413 A1 décrit un carter selon l'art antérieur.

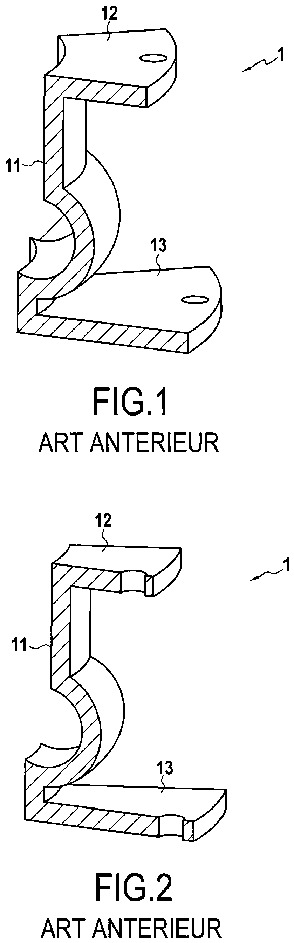

Les figures 1 et 2 présentent ainsi deux vues d'un segment de carter de turbopompe. Ce segment 1 est formé en une pièce, et comprend une portion 11 formant une paroi du carter ainsi que deux brides 12 et 13. La portion 11 présente une paroi interne et une paroi externe, ces parois étant définies en fonction du carter formé à partir de plusieurs segments de carter. Les brides 12 et 13 s'étendent depuis la paroi externe de la portion 11. Une fois l'assemblage formé, une couche isolante est typiquement appliquée sur la paroi externe afin d'améliorer les propriétés d'isolation thermique de l'ensemble. Comme indiqué précédemment, une telle application ultérieure d'un isolant thermique par l'extérieur est contraignante en termes de mise en œuvre.

Le présent exposé vise ainsi à proposer un système d'isolation thermique s'affranchissant de telles contraintes.

### PRESENTATION DE L'INVENTION

Le présent exposé concerne ainsi un carter d'un organe cryogénique d'engin spatial ledit carter étant formé d'une pluralité de segments comprenant chacun :
- une paroi interne délimitant un volume interne,
- une paroi externe opposée à la paroi interne,
chacun desdits segments comprenant en outre une cavité intermédiaire aménagée entre la paroi interne et la paroi externe, la paroi externe de chacun des segments comprenant des orifices adaptés pour permettre le remplissage de la cavité intermédiaire.

Par organe cryogénique, on entend un composant destiné à contenir ou convoyer un fluide cryogénique, tel qu'un ergol. On peut citer à titre d'exemple d'organe cryogénique d'engin spatial une turbopompe, des canalisations destinées à contenir un fluide cryogénique, ou encore un réservoir de fluide cryogénique.

Selon un exemple, ladite cavité intermédiaire est remplie de matériau isolant, ledit matériau isolant présentant une conductivité thermique inférieure à celle du matériau formant le carter.

Selon un exemple, lesdits segments sont réalisés par fabrication additive, typiquement par fabrication additive par fusion laser sur lit de poudre.

Selon un exemple, chaque segment comprend en outre des obturateurs adaptés pour obturer les orifices de la paroi externe, de sorte que pour chaque segment du carter, la cavité intermédiaire dudit segment est entièrement close.

Le présent exposé concerne également une méthode de réalisation d'un carter d'organe cryogénique d'engin spatial, dans laquelle on réalise par fabrication additive une pluralité de segments comprenant chacun une paroi interne délimitant un volume interne et une paroi externe opposée à la paroi interne, et dans laquelle on aménage une cavité intermédiaire entre la paroi interne et la paroi externe, et des orifices dans la paroi externe de manière à relier la cavité intermédiaire à un milieu extérieur.

Selon un exemple, on remplit ensuite chacune desdites cavités intermédiaires de matériau isolant, ledit matériau isolant présentant une conductivité thermique inférieure à celle du matériau formant le segment.

On obture alors typiquement ensuite les orifices aménagés dans la paroi externe, de manière à isoler les cavités intermédiaires du milieu extérieur.

Selon un exemple, lesdits segments sont réalisés par fabrication additive par fusion laser sur lit de poudre.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- les figures 1 et 2 représente deux vues d'un segment de carter présentant une structure conventionnelle,
- les figures 3, 4 et 5 sont trois vues d'un segment selon un aspect de l'invention,
- la figure 6 présente schématiquement un procédé selon un aspect de l'invention.

Sur l'ensemble des figures, les éléments identiques sont repérés par des références numériques communes.

### DESCRIPTION DETAILLEE D'EXEMPLES DE REALISATION

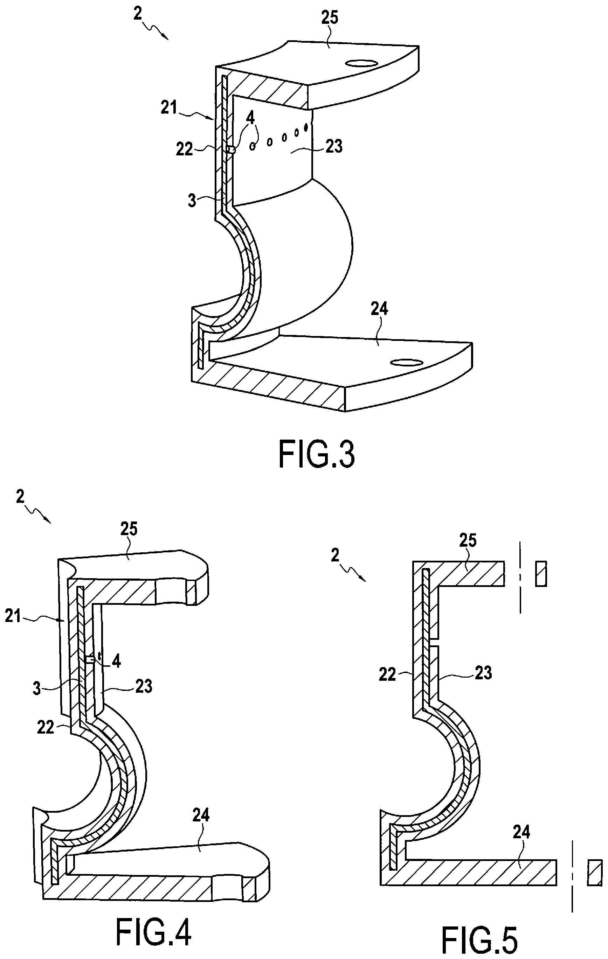

- les figures 3, 4 et 5 sont trois vues d'un segment 2 selon un aspect de l'invention.

Le segment 2 tel que présenté comprend une portion principale 21 présentant une paroi interne 22 et une paroi externe 23, ainsi que deux portions de fixation 24 et 25 formant des brides pour permettre de solidariser le segment 2 tel que présenté à d'autres éléments, par exemples d'autres segments ou au châssis d'un système.

Une pluralité de segments 2 de formes variées sont typiquement assemblés afin de former une structure de carter d'organe cryogénique tel qu'un carter de turbopompe, une canalisation ou plus généralement une pièce destinée à contenir un dispositif ou produit pour lequel une isolation thermique ou une protection thermique est souhaitée.

Le segment 2 tel que présenté présente par ailleurs une cavité intermédiaire 3, aménagée au sein de la portion principale 21, entre la paroi interne 22 et la paroi externe 23.

La cavité intermédiaire 3 est entièrement formée au sein de la portion principale 21. Plusieurs orifices 4 sont aménagés dans la paroi externe 23 du segment 2 afin de relier la cavité intermédiaire 3 au milieu externe. A l'exception de ces orifices 4, la cavité intermédiaire 3 est entièrement close.

Les orifices 4 sont dimensionnés de manière à permettre l'insertion un matériau isolant dans les cavités intermédiaires 3. Par matériau isolant, on entend un matériau présentant une conductivité thermique inférieure à la conductivité thermique du matériau formant le segment 2.

Ainsi, une fois les segments 2 formés, un matériau isolant est inséré dans les cavités intermédiaires 3 de chacun des segments 2. Une fois le matériau isolant injecté, les orifices 4 sont obturés, typiquement à l'aide de bouchons ou soudure (non représenté sur les figures), de sorte que le matériau isolant injecté à l'intérieur des cavités intermédiaires 2 soit totalement isolé du milieu extérieur. Les bouchons ainsi employés pour obturer les orifices 4 sont typiquement réalisés dans le même matériau que le segment 2 considéré, et sont typiquement collés ou soudés à la paroi externe 23 de la portion principale 21.

Ainsi, sensiblement en tout point de la portion principale 21, le segment 2 présente trois couches successives disposées selon l'épaisseur de la portion principale 21 : une première couche correspondant à la paroi interne 22, une deuxième couche correspondant à la couche de matériau isolant disposé dans la cavité intermédiaire 3, et une troisième couche correspondant à la paroi externe 23. Par conséquent, la conductivité thermique équivalente de la portion principale 21 est égale à λₜₕ₁ + λₜₕ₂ + λₜₕ₃, avec λth1 la conductivité thermique de la première couche, Àth2 la conductivité thermique de la deuxième couche, et Àth3 la conductivité thermique de la troisième couche.

La première couche et la troisième couche sont typiquement formées du même matériau et présentent typiquement des épaisseurs identiques ; elles présentent donc typiquement la même conductivité thermique. La conductivité thermique équivalente de la portion principale 21 est donc typiquement égale à 2^{∗}λₜₕ₁ + λₜₕ₂ = 2^{∗}λₜₕ₃ + λₜₕ₂, et est donc inférieure à la conductivité thermique d'un segment qui ne comprendrait pas une cavité intermédiaire 3 remplie de matériau isolant.

Ainsi, le segment 2 tel que proposé présente une conductivité thermique réduite pour un encombrement équivalent, ce qui est avantageux pour la réalisation d'un ensemble isolant.

Le segment 2 tel que présenté est avantageusement réalisé par fabrication additive, typiquement par fusion laser sur lit de poudre. La fabrication additive permet en effet de former des cavités de formes complexes au sein de segments 2 qui ne pourraient pas être réalisées à l'aide de procédés d'usinage ou de fonderie.

Une fois que différents segments ont ainsi été réalisés, ils sont assemblés de manière à former une structure telle qu'un carter d'organe cryogénique (par exemple une turbopompe, une canalisation ou plus généralement une pièce destinée à contenir un dispositif ou produit pour lequel une isolation thermique ou une protection thermique est souhaitée). Une structure ainsi formée de plusieurs segments similaires au segment 2 présenté en référence aux figures 3 à 5 est avantageuse en ce qu'elle présente des propriétés d'isolation thermique avantageuses et permet de s'affranchir d'une isolation additionnelle par sa paroi externe. De plus, l'isolation étant réalisée au préalable lors de la formation des segments 2, on s'affranchit d'étapes manuelles réalisées sur site et pour lesquelles il est communément difficile d'obtenir une précision satisfaisante. L'utilisation de procédés de fabrication additive pour la réalisation des segments 2 permet d'accentuer un tel avantage en rendant possible la réalisation de géométries complexes, pour lesquelles une isolation par la paroi externe aurait été particulièrement délicate à réaliser convenablement.

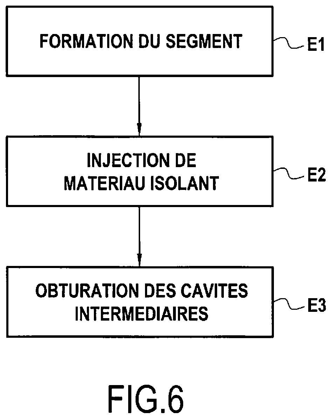

La figure 6 illustre schématiquement un procédé pour la réalisation d'un segment 2 tel que déjà présenté en référence aux figures 2 à 5.

Lors d'une première étape E1, on forme un segment 2, typiquement au moyen d'un procédé de fabrication additive tel que la fusion laser sur lit de poudre. Comme déjà décrit précédemment, le segment 2 ainsi formé comprend une portion principale 21 définissant une paroi interne 22 et une paroi externe 23, et présentant une cavité intermédiaire 3 en son sein. La paroi externe 23 présente des orifices 4 reliant la cavité intermédiaire 3 au milieu externe.

Lors d'une deuxième étape E2, on injecte un matériau isolant dans la cavité intermédiaire 3, le matériau isolant présentant une conductivité thermique inférieure à la conductivité thermique du matériau employé pour former le segment 2.

Une fois le matériau isolant injecté, on réalise une troisième étape E3 d'obturation des orifices 4, de manière à obturer les cavités intermédiaire 3 du milieu extérieur.

Différents segments ainsi formés peuvent ensuite être assemblés afin de former une structure isolante.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

Néanmoins, la portée de l'invention est exclusivement définie par les revendications suivantes.

## Revendications

1. Carter pour organe cryogénique d'engin spatial ledit carter étant formé d'une pluralité de segments (2) comprenant chacun :
- une paroi interne (22) délimitant un volume interne,
- une paroi externe (23) opposée à la paroi interne,
chacun desdits segments (2) comprenant en outre une cavité intermédiaire (3) aménagée entre la paroi interne (22) et la paroi externe (23), **caractérisé en ce que** la paroi externe (23) de chacun des segments (2) comprend des orifices (4) adaptés pour permettre le remplissage de la cavité intermédiaire (3).

2. Carter selon la revendication 1, dans lequel ladite cavité intermédiaire (3) est remplie de matériau isolant, ledit matériau isolant présentant une conductivité thermique inférieure à celle du matériau formant le carter.

3. Carter selon l'une des revendications 1 ou 2 **caractérisé en ce que** lesdits segments sont réalisés par fabrication additive.

4. Carter selon la revendication 3, **caractérisé en ce que** lesdits segments sont réalisés par fabrication additive par fusion laser sur lit de poudre.

5. Carter selon l'une des revendications 1 à 4, comprenant en outre des obturateurs adaptés pour obturer les orifices (4) de la paroi externe (23), de sorte que pour chaque segment (2) du carter, la cavité intermédiaire (3) dudit segment (2) est entièrement close.

6. Méthode de réalisation d'un carter d'organe cryogénique d'engin spatial, dans laquelle on réalise par fabrication additive une pluralité de segments (2) comprenant chacun une paroi interne (22) délimitant un volume interne et une paroi externe (23) opposée à la paroi interne, et dans laquelle on aménage une cavité intermédiaire (3) entre la paroi interne (22) et la paroi externe (23), et des orifices (4) dans la paroi externe (23) de manière à relier la cavité intermédiaire (3) à un milieu extérieur.

7. Méthode selon la revendication 6, dans laquelle on remplit ensuite chacune desdites cavités intermédiaires (3) de matériau isolant, ledit matériau isolant présentant une conductivité thermique inférieure à celle du matériau formant le segment (2).

8. Méthode selon la revendication 7, dans laquelle on obture ensuite les orifices (4) aménagés dans la paroi externe (23), de manière à isoler les cavités intermédiaires (3) du milieu extérieur.

9. Méthode selon l'une des revendications 6 à 8, dans laquelle lesdits segments (2) sont réalisés par fabrication additive par fusion laser sur lit de poudre.

## Patentansprüche

1. Gehäuse für ein kryogenes Element eines Raumfahrzeugs, wobei das genannte Gehäuse aus einer Vielzahl von Segmenten (2) gebildet ist, jeweils umfassend:
- eine Innenwand (22), die ein inneres Volumen begrenzt,
- eine Außenwand (23), die der Innenwand gegenüberliegt,
wobei jedes der genannten Segmente (2) außerdem einen Zwischenhohlraum (3) umfasst, der zwischen der Innenwand (22) und der Außenwand (23) angeordnet ist, **dadurch gekennzeichnet, dass** die Außenwand (23) jedes der Segmente (2) Öffnungen (4) umfasst, die dazu ausgelegt sind, das Füllen des Zwischenhohlraums (3) zu gestatten.

2. Gehäuse gemäß Anspruch 1, wobei der genannte Zwischenhohlraum (3) mit Isoliermaterial gefüllt ist, wobei das genannte Isoliermaterial eine thermische Leitfähigkeit unter jener des Materials aufweist, welches das Gehäuse bildet.

3. Gehäuse gemäß einem der Ansprüche 1 oder 2, **dadurch gekennzeichnet, dass** die genannten Segmente durch additive Fertigung hergestellt sind.

4. Gehäuse gemäß Anspruch 3, **dadurch gekennzeichnet, dass** die genannten Segmente durch additive Fertigung durch Laserfusion auf einem Pulverbett hergestellt sind.

5. Gehäuse gemäß einem der Ansprüche 1 bis 4, außerdem umfassend Verschlüsse, die dazu ausgelegt sind, die Öffnungen (4) der Außenwand (23) derart zu verschließen, dass für jedes Segment (2) des Gehäuses der Zwischenhohlraum (3) des genannten Segments (3) gänzlich verschlossen ist.

6. Verfahren zur Herstellung eines Gehäuses eines kryogenen Elements eines Raumfahrzeugs, wobei durch additive Fertigung eine Vielzahl von Segmenten (2) hergestellt wird, jeweils umfassend eine Innenwand (22), die ein inneres Volumen begrenzt, und eine Außenwand (23), die der Innenwand gegenüberliegt, und wobei ein Zwischenhohlraum (3) zwischen der Innenwand (22) und der Außenwand (23) und Öffnungen (4) in der Außenwand (23) angeordnet werden, um den Zwischenhohlraum (3) mit einem externen Medium zu verbinden.

7. Verfahren gemäß Anspruch 6, wobei anschließend jeder der genannten Zwischenhohlräume (3) mit Isoliermaterial gefüllt wird, wobei das genannte Isoliermaterial eine thermische Leitfähigkeit unter jener des Materials aufweist, welches das Segment (2) bildet.

8. Verfahren gemäß Anspruch 7, wobei anschließend die Öffnungen (4) verschlossen werden, die in der Außenwand (23) angeordnet sind, um die Zwischenhohlräume (3) gegen das externe Medium zu isolieren.

9. Verfahren gemäß einem der Ansprüche 6 bis 8, wobei die genannten Segmente (2) durch additive Fertigung durch Laserfusion auf einem Pulverbett hergestellt werden.

## Claims

1. A casing for a cryogenic spacecraft member, said casing being formed of a plurality of segments (2) each comprising:
- an internal wall (22) delimiting an internal volume,
- an external wall (23) opposite the internal wall,
each of said segments (2) further comprising an intermediate cavity (3) arranged between the internal wall (22) and the external wall (23),
**characterized in that**
the external wall (23) of each of the segments (2) comprises orifices (4) adapted to allow the filling of the intermediate cavity (3).

2. The casing according to claim 1, wherein said intermediate cavity (3) is filled with insulating material, said insulating material having a thermal conductivity lower than that of the material forming the casing.

3. The casing according to any of claims 1 or 2 **characterized in that** said segments are made by additive manufacturing.

4. The casing according to claim 3, **characterized in that** said segments are made by additive manufacturing by laser fusion on a powder bed.

5. The casing according to any of claims 1 to 4, further comprising obturators adapted to obturate the orifices (4) of the external wall (23), so that for each segment (2) of the casing, the intermediate cavity (3) of said segment (2) is completely closed.

6. A method for making a casing for a cryogenic spacecraft member, wherein a plurality of segments (2) are made by additive manufacturing, each comprising an internal wall (22) delimiting an internal volume and an external wall (23) opposite the internal wall, and wherein an intermediate cavity (3) is arranged between the internal wall (22) and the external wall (23), and orifices (4) in the external wall (23) so as to connect the intermediate cavity (3) to an external medium.

7. The method according to claim 6, wherein each of said intermediate cavities (3) of insulating material is then filled, said insulating material having a thermal conductivity lower than that of the material forming the segment (2).

8. The method according to claim 7, wherein the orifices (4) arranged in the external wall (23) are then obturated so as to isolate the intermediate cavities (3) from the external medium.

9. The method according to any of claims 6 to 8, wherein said segments (2) are made by additive manufacturing by laser fusion on a powder bed.
